# EUROPÄISCHE PATENTSCHRIFT

(11) **EP 3 877 639 B1**
(45) Veröffentlichungstag und Bekanntmachung des Hinweises auf die Patenterteilung: **29.11.2023**
(21) Anmeldenummer: 19795492.8
(22) Anmeldetag: 22.10.2019
(51) Int. Cl.: F02D 9/10, F16K 31/06, H01R 31/06, F01P 7/14, F01P 11/14, F16K 11/24, G05D 23/19, H01F 7/06, H01R 13/627, H01R 13/639

(54) **STECKADAPTER ZUM ANDOCKEN AN EIN MAGNETVENTIL**
PLUG ADAPTER FOR DOCKING TO A ELECTROVALVE
ADAPTATEUR ENFICHABLE POUR L'ACCOUPLEMENT À UNE ÉLECTROVALVE

(30) Priorität: 08.11.2018 DE 202018106353 U
(43) Veröffentlichungstag der Anmeldung: 15.09.2021
(73) Patentinhaber: WOCO Industrietechnik GmbH, 63628 Bad Soden-Salmünster (DE)
(72) Erfinder: DIESSL, Björn, 63654 Büdingen (DE); POPOV, Stefan, 63654 Büdingen (DE); THOMAS, Stephan, 63571 Gelnhausen (DE)
(74) Vertreter: Schmid, Nils T.F.
(86) Internationale Anmeldenummer: PCT/EP2019/078719
(87) Internationale Veröffentlichungsnummer: WO 2020/094390

(56) Entgegenhaltungen:
- EP-A2- 2 604 923
- CN-A- 107 327 591
- US-A1- 2014 261 780
- US-B2- 10 001 224
- US-B2- 10 025 325

## Beschreibung

Die Erfindung betrifft einen Adapter zum Andocken und/oder Anschließen an ein insbesondere bereits in einem Kraftfahrzeug montierten Magnetventil vorzugsweise innerhalb eines Kühlkreislaufs oder Turboladerkreislaufs des Kraftfahrzeugs, das einen an einem Magnetventilgehäuse angeordneten Steckanschluss mit einem Signaleingang zum Empfangen eines elektrischen Steuersignals eines übergeordneten Steuergeräts des Kraftfahrzeugs zum Betreiben des Magnetventils aufweist. Die Erfindung betrifft auch ein Magnetventil mit einem Steckadapter. Gegenstand der Erfindung ist außerdem eine Anordnung mit einem Steuergerät, einem Magnetventil und einem Steckadapter sowie ein Kühlkreislauf mit einer solchen Anordnung.

Bisherige Lösungen zur Ansteuerung von Magnetventilen in Kraftfahrzeugen sehen vor, je ein Magnetventil unmittelbar an einen Leistungsausgang eines Steuergeräts des Kraftfahrzeugs anzubinden. Aufgrund der begrenzten Anzahl an Leistungsausgängen eines Steuergeräts besteht jedoch das Problem, dass über diese Art der Verbindung nur eine entsprechend begrenzte Anzahl an Aktuatoren beziehungsweise Magnetventilen angesteuert werden kann.

Es ist bereits bekannt, durch den Einsatz der Local Interconnect Network (LIN)-Technologie diese Begrenzung auf die Anzahl der Leistungsausgänge zu überwinden. Die LIN-Technologie, auch LIN-Bus genannt, ist ein serielles Kommunikationssystem für die Vernetzung von Sensoren und Aktoren und kommt dort zum Einsatz, wo die Bandbreite und Vielseitigkeit von CAN nicht benötigt wird. Bekannte Anwendungsbeispiele von LIN sind die Vernetzung innerhalb der Tür oder des Sitzes eines Kraftfahrzeugs. Ein LIN setzt sich aus einem Master, zumeist bestehend aus einem Microcontroller, und einem oder bis zu 16 Slaves beziehungsweise Aktuatoren zusammen, so dass entsprechend mittels eines LINs bis zu 16 Magnetventile angesteuert werden können. Zum Herstellen einer Datenverbindung des LIN-Kommunikationssystems mit dem Steuergerät wird der LIN-Master dazu als Bridge an das CAN- Kommunikationssystem des Kraftfahrzeugs angebunden.

In Figur A ist eine aus dem Stand der Technik bekannte Methode zum Ansteuern von Magnetventilen dargestellt. Die elektrischen Signaleingänge 12 der Magnetventile 1 bis N sind dabei jeweils mit einem separaten Leistungsausgang 18 eines übergeordneten Steuergeräts 20 gekoppelt, wobei das Steuergerät 20 zur eigenen Leistungsversorgung und der Leistungsversorgung der Magnetventile 2 an eine Autobatterie 22 des Kraftfahrzeugs angeschlossen ist. Ein Mikrocontroller 24 des Steuergeräts 20 steuert dabei den jeweiligen Leistungsausgängen 18 des Steuergeräts 20 zugeordnete Leistungsschalter 26 S1 bis SN für jedes der Magnetventile 2 an, wobei die Leistungsschalter 26 entweder in eine geöffnete oder in eine geschlossene Position gebracht sind. Nachteilig an der dargestellten Methode ist insbesondere, dass nur eine begrenzte Anzahl an Magnetventilen 2 an das Steuergerät 20 angeschlossen werden kann, nämlich begrenzt auf die Anzahl an dessen Leistungsausgänge 18. Ein weiterer Nachteil besteht darin, dass die Magnetventile 2 jeweils mit einem Maximalstrom beaufschlagt werden, der für ein sicheres Öffnen der Ventile 2 auch bei maximaler entgegenwirkender Kraft kalkuliert ist. Da der Maximalstrom jedoch nur in bestimmten Betriebszuständen wie hohem Fluiddruck oder vollständig geschlossenem Ventil notwendig ist, verursacht die gezeigte Anordnung einen unnötig hohen Stromverbrauch.

Ein System zum Ansteuern eines Magnetventils über ein LIN-Kommunikationssystem bekannt aus der US 10,001,224 B2. Darin offenbart ist ein Magnetventil für ein Kraftfahrzeug, das einen Sender und einen Empfänger sowie einen Microcontroller aufweist. Der Microcontroller steht in Datenaustausch mit dem Sender und dem Empfänger und weist ferner eine Funktion zum Ansteuern eines Stellantriebs des Ventils auf. Über eine Local Interconnect Network (LIN)-Schnittstelle erhält der Empfänger Temperaturdaten über ein Getriebefluid des Kraftfahrzeugs und sendet diese an den Microcontroller. Der Microcontroller vergleicht die empfangenen Daten mit einem Schwellwert und beaufschlagt in Abhängigkeit von der errechneten Differenz eine Magnetspule des Stellantriebs des Magnetventils mit einem Strom zur Anpassung der Ventilstellung an den veränderten Temperaturzustand.

Ein wesentlicher Nachteil des offenbarten Systems besteht jedoch darin, dass bei diesem die Komponenten zur Anbindung des Ventils an den LIN-Bus im Ventilgehäuse selbst verbaut werden und dadurch das Ventil, der Microcontroller sowie der Sender und der Empfänger eine integrale, untrennbare Einheit bilden. Dadurch ist das offenbarte System insbesondere für bereits in einem Kraftfahrzeug verbaute Ventile, welche an den LIN-Bus angebunden werden sollen, an welchen jedoch keine Anbindungsmöglichkeit an den LIN-Bus vorgesehen ist, nicht einsetzbar. Um das System einsetzen zu können, müssten diese Ventile im Gegenteil sogar vollständig demontiert und durch die vorgeschlagenen Ventile ersetzt werden, was jedoch einen hohen Arbeits- und Kostenaufwand verlangen würde.

Es ist daher eine Aufgabe der Erfindung, die Nachteile des Stands der Technik zu überwinden, insbesondere einen Steckadapterbereitzustellen, mittels welchem eine Anbindung von bereits in einem Kraftfahrzeug montierten Magnetventilen an ein übergeordnetes serielles Bussystem erreicht werden kann.

Diese Aufgabe wird gelöst durch die Gegenstände der unabhängigen Ansprüche.

Gemäß einem Aspekt der Erfindung kann der Steckadapter einen an den Steckanschluss des Magnetventils angepassten Magnetventilanschluss für eine lösbare Koppelung des Steckadapters an den Steckanschluss des Magnetventils umfassen, wobei der Magnetventilanschluss und der Steckanschluss hinsichtlich Steckform und elektrischer Signalübertragung aufeinander abgestimmt sind, sowie eine Elektronikkomponente, insbesondere einen Microcontroller, zum Verarbeiten und/oder Regeln eines elektrischen Ausgangssignals zum Betreiben des Magnetventils, wobei im gesteckten Zustand des Steckadapters an den Steckanschluss eine elektrische Verbindung zwischen der Elektronikkomponente und dem Magnetventil über den Magnetventilanschluss aufgebaut ist. Beispielsweise kann durch die Elektronikkomponente eine induktive Antriebseinheit des Magnetventils angesteuert werden, mittels welcher ein Stellglied des Ventils zwischen einer Offenstellung zum Freigeben einer Fluidleitung und einer Schließstellung zum Verschließen der Fluidleitung verstellt werden kann. Im nicht gesteckten Zustand des Steckadapters an den Steckanschluss kann die elektrische Verbindung zwischen der Elektronikkomponente und dem Magnetventil unterbrochen sein.

Ferner kann der an den Steckanschluss des Magnetventils angepasste Magnetventilanschluss zum mechanischen Koppeln ein insbesondere männliches Steckstück zum insbesondere nur in einer Verdrehposition möglichen Stecken in ein insbesondere weibliches Gegenstück des Steckanschlusses des Magnetventils aufweisen, wobei insbesondere an dem Steckstück eine Rastnut, insbesondere senkrecht zu einer Steckrichtung verlaufend, zum Verrasten mit einer komplementären Rastnase in dem Gegenstück ausgebildet ist. Zum fluiddichten Anschließen des Adapters an den Steckanschluss kann ferner ein Dichtring vorgesehen sein, der das Steckstück umgibt.

Weiterhin ist denkbar, dass im und/oder am Steckstück zum elektrischen Verbinden der Elektronikkomponente mit dem Betriebselement des Magnetventils zumindest eine elektrische Leitung aufgenommen ist. Hierzu kann das Steckstück Durchgangskanäle aufweisen, welche in eine dem Steckanschluss zugewandte Stirnseite münden und in welchen die Leitungen aufgenommen sind. Ferner ist denkbar, dass die Leitungen nicht bündig mit der Stirnseite abschließen, sondern zurückgesetzt in den Kanälen enden, so dass entsprechende Pins des Steckanschlusses in die an der Stirnseite des Steckstücks befindlichen Kanalöffnungen zur Kontaktierung mit den Leitungen hineinragen können.

Darüber hinaus ist der Steckadapter eine fluiddichte Aufnahmekammer mit einem insbesondere rechteckigen Grundriss und mit einer den Grundriss umgebenden Wandung sowie einem transparenten Deckel umfassen, wobei die Elektronikkomponente in der Aufnahmekammer aufgenommen und/oder fixiert ist, und wobei die Aufnahmekammer mittels des Deckels fluiddicht verschließbar oder verschlossen ist. Beispielsweise können am Deckel ein oder mehrere Niederhalter angeformt sein, welche bei mit dem Deckel verschlossener Aufnahmekammer die Elektronikkomponente am Kammerboden fixieren. Zum fluiddichten Verschließen der Aufnahmekammer kann in einer Umrandung des Deckels ferner ein umlaufendes Dichtelement aufgenommen sein, welches bei aufgesetztem Deckel auf die Aufnahmekammer auf oder an der Wandung der Aufnahmekammer dichtend anliegt. Es ist weiterhin möglich, dass sich die Aufnahmekammer im Wesentlichen in einer Ebene parallel zu einer Steckrichtung des Adapters erstreckt und/oder die Elektronikkomponente in einer Ebene parallel zur Steckrichtung des Adapters und beabstandet vom Steckstück in der Aufnahmekammer aufgenommen und/oder fixiert ist. Durch die Anordnung der Elektronikkomponente parallel zur Steckebene kann der Adapter sehr kompakte Abmessungen aufweisen. Gleichzeitig wird durch die von außen leicht zugängliche Aufnahmekammer der Wartungsaufwand minimiert, wenn beispielsweise ein Defekt an der Elektronikkomponente auftauchen sollte oder diese durch eine anders konfigurierte Elektronikkomponente ersetzt werden sollte.

Ferner kann in einem Kammerboden der Aufnahmekammer zumindest eine Durchgangsöffnung zur Kabeldurchführung der zumindest einen elektrischen Leitung und/oder zumindest einem Datenübertragungsleiterkabel angeordnet sein. In die Durchgangsöffnungen können beispielsweise die mit der Elektronikkomponente zu kontaktierenden Leitungen eingebracht sein. Die Durchgangsöffnungen können hierzu in Durchgangskanäle münden, die einerseits an ihrem der Aufnahmekammer abgewandten Ende in das magnetventilseitige Steckstück und andererseits an ihrem anderen Ende in die steuergerätseitige Steckeraufnahme münden.

Möglich ist zudem, dass eine Leiterplatte der Elektronikkomponente Durchgangsöffnungen aufweist, in welche die elektrischen Leitungen und/oder zumindest ein Datenübertragungsleiter eingesteckt sind, wodurch die Leiterplatte in der Aufnahmekammer des Adapters gehalten ist. Die Leitungen können ferner mit der Leiterplatte der Elektronikkomponente verlötet sein. Je nachdem, ob der Steckadapter zusätzlich zum steuergerätseitigen Dateneingang einen steuergerätseitigen Datenausgang aufweist oder nicht, können in der Leiterplatte fünf oder sechs Durchgangsöffnungen eingebracht sein. Entsprechend kann auch der Kammerboden fünf oder sechs Durchgangsöffnungen aufweisen.

Darüber hinaus kann der Deckel an seiner der Aufnahmekammer zugewandten Seite zumindest einen Niederhalter aufweisen, mittels welchem die Elektronikkomponente in der Aufnahmekammer fixierbar ist. Der Deckel kann zum Verschließen der Aufnahmekammer beispielsweise mittels eines Verrastmechanismus, einer Schraub- oder Nietverbindung oder Klebstoff an der Wandung der Aufnahmekammer befestigt sein

Außerdem kann der Steckadapter zum Anschließen des Steckadapters an ein übergeordnetes Steuergerät über ein serielles Bussystem und/oder zum Anschließen des Steckadapters an eine Autobatterie des Kraftfahrzeugs eine an einen Stecker der Bus-Kommunikationsleitung des Bussystems angepasste Steckeraufnahme aufweisen, mit welcher der Stecker der Bus-Kommunikationsleitung elektrisch und/oder mechanisch gekoppelt oder koppelbar ist. Die insbesondere weibliche Steckeraufnahme kann zur Aufnahme eines entsprechenden männlichen Steckers eine Umrandung aufweisen. Die Umrandung kann die Stirnseite des Adapters bilden. Die Steckeraufnahme kann ferner einen gegenüber der Umrandung zurückgesetzten Aufnahmeboden aufweisen, wobei eine Wandung der Umrandung den Aufnahmeboden umgeben kann. Der Aufnahmeboden kann Öffnungen aufweisen, in welche die mit der Aufnahmekammer verbundenen Leitungskanäle münden. In die Öffnungen können die mit der Elektronikkomponente zu verbindenden steuergerätseitigen Leitungen eingesteckt sein. Die Leitungen können aus den Öffnungen pinartig hervorstehen oder in den Öffnungen zurückgesetzt enden, zur Kontaktierung mit einem entsprechenden steuergerätseitigen Stecker. Innerhalb der Wandung der Umrandung kann ein Positionierelement angeformt sein, das ein Anschließen des steuergerätseitigen Steckers in nur einer Verdrehposition sicherstellt.

In der Steckeraufnahme kann zumindest ein Datenübertragungsleiter zur Herstellung einer Datenschnittstelle zwischen dem übergeordneten Steuergerät und der Elektronikkomponente sowie zumindest eine elektrische Leitung zur Herstellung einer elektrischen Spannungsversorgung zwischen einer Autobatterie des Kraftfahrzeugs und der Elektronikkomponente aufgenommen sein. Die Steckeraufnahme weist zur Energieversorgung des Adapters vorzugsweise zwei elektrische Leitungen auf. Die Steckeraufnahme kann einen Datenübertragungsleiter zum Empfangen von Daten, beispielsweise LIN-Daten, aufweisen. Die Steckeraufnahme kann zusätzlich einen weiteren Datenübertragungsleiter zum Senden von Daten an das Steuergerät aufweisen.

Der Steckadapter kann ferner ein Gehäuse aufweisen, wobei der Magnetventilanschluss und/oder die Aufnahmekammer und/oder die Steckeraufnahme integral mit dem Gehäuse ausgebildet sind. Das Gehäuse kann aus Kunststoff bestehen. Der Kunststoff kann temperaturbeständig, wasserabweisend und/oder resistent gegenüber Ölen sein. Das Gehäuse kann aus zwei Halbschalen gebildet sein, welche miteinander verfügt sind.

Dabei ist denkbar, dass das Gehäuse eine Hauptachse in Steckrichtung des Steckadapters aufweist, wobei der Magnetventilanschluss und die Steckeraufnahme voneinander wegweisend in der Hauptachse an gegenüberliegenden Enden des Gehäuses angeordnet sind. Die Stirnseiten des Adapters können orthogonal zur Hauptachse verlaufen. Die Stirnseiten können insbesondere die Umrandung der Steckeraufnahme sowie die Stirnseite des Steckstücks sein. Vorzugsweise ragt die Aufnahmekammer der Elektronikkomponente in Hauptachsenrichtung nicht über die Stirnseite des Steckstücks hervor.

Außerdem ist denkbar, dass sich die Aufnahmekammer L-förmig von der Hauptachse des Gehäuses wegerstreckt und zumindest abschnittweise parallel beabstandet zum Steckstück verläuft. Die Rastnut des Steckstücks kann der Rückseite der Aufnahmekammer zugewandt sein. Die Rastnut kann auch der Rückseite der Aufnahmekammer abgewandt am Steckstück angeordnet sein.

Ferner kann das Gehäuse an einem die Steckeraufnahme umgebenden Gehäuseabschnitt zum Verrasten des Steckers der Bus-Kommunikationsleitung zumindest eine hinterschnittige Rastnase aufweisen, wobei die Rastnase eine in Aufsteckrichtung des Steckers ansteigende Anlaufschräge sowie eine in selbiger Aufsteckrichtung hinter der Anlaufschräge angeordnete Rastplatte aufweisen kann, welche von einem komplementären Gegenverbinder des Steckers hintergreifbar ist. Vorzugsweise kann das Gehäuse auf zwei gegenüberliegenden Gehäuseabschnitten zwei Rastnasen aufweisen.

Dazu kann die Elektronikkomponente dazu eingerichtet sein, im gekoppelten Zustand des Steckadapters an das Steuergerät über die Bus-Kommunikationsleitung zumindest ein Bus-Signal vom Steuergerät zu empfangen und dieses zumindest eine Bus-Signal in zumindest ein elektrisches Steuersignal zum Ansteuern des Magnetventils umzuwandeln, und das elektrische Steuersignal von der Elektronikkomponente an das Magnetventil zu übermitteln. Das empfangene Signal kann Informationen zu Betriebsparametern eines Kühlkreislaufs oder Turboladerkreislaufs des Kraftfahrzeugs enthalten. Das empfangene Signal kann Druck- oder Temperaturinformationen beinhalten.

Ebenso vorgesehen sein kann ein Magnetventil, insbesondere bereits in einem Kraftfahrzeug montiert, vorzugsweise innerhalb eines Kühlkreislaufs oder Turboladerkreislaufs des Kraftfahrzeugs, das einen an einem Magnetventilgehäuse angeordneten Steckanschluss mit einem Signaleingang zum Empfangen eines elektrischen Steuersignals eines Steuergeräts des Kraftfahrzeugs zum Betreiben des Magnetventils umfasst, wobei das Magnetventil einen wie oben ausgeführten Steckadapter umfassen kann.

Dabei kann vorgesehen sein, dass der Steckanschluss zum Bereitstellen einer Clipverbindung mit dem Magnetventilanschluss eine Rastnase aufweist, die zum Eingreifen in die Rastnut des Steckstücks ausgebildet ist. Der Steckanschluss kann ferner ein von seiner Außenseite her zugängliches manuell betätigbares Element aufweisen, mittels welchem zum Lösen des Steckadapters vom Magnetventil die Rastverbindung aufgehoben werden kann.

Ferner kann das Betriebselement des Magnetventils einen Stellantrieb mit einem elektromagnetisch betätigbaren Stellglied und einer Magnetspule aufweisen, welche mittels des elektrischen Steuersignals ansteuerbar ist. Der Stellantrieb kann ein Stellglied aufweisen, mittels welchem eine Fluidleitung des Magnetventils freigegeben oder verschlossen werden kann. Das Stellglied kann zwischen der Offenstellung oder der Schließstellung verfahren werden. Ferner ist denkbar, dass das Stellglied Zwischenpositionen zwischen der Offenstellung und der Schließstellung einnehmen kann.

Darüber hinaus kann vorgesehen sein, dass das Stellglied des Magnetventils das Magnetventil in seiner Ausgangsposition verschließt und infolge einer Ansteuerung des Magnetventils mittels eines elektrischen Steuersignals öffenbar ist. Es kann auch vorgesehen sein, dass das Stellglied das Magnetventil in seiner Ausgangsposition freigibt und infolge einer Ansteuerung des Magnetventils mittels eines elektrischen Steuersignals verschließbar ist.

Außerdem vorgesehen sein kann eine Anordnung aus einem Steuergerät und einem insbesondere bereits in einem Kraftfahrzeug montierten Magnetventil, vorzugsweise innerhalb eines Kühlkreislaufs oder Turboladerkreislaufs des Kraftfahrzeugs, wobei das Magnetventil einen an einem Magnetventilgehäuse angeordneten Steckanschluss mit einem Signaleingang zum Empfangen eines elektrischen Steuersignals eines Steuergeräts des Kraftfahrzeugs zum Betreiben des Magnetventils umfasst, wobei die Anordnung einen wie oben ausgeführten Steckadapter umfassen kann.

Darüber hinaus kann ein Kühlkreislauf oder ein Turboladerkreislauf für ein Kraftfahrzeug mit einer wie zuvor beschriebenen Anordnung vorgesehen sein.

Weitere Eigenschaften, Vorteile und Merkmale der Erfindung sind in der folgenden Beschreibung bevorzugter Ausführungen der Erfindung anhand der beiliegenden Zeichnungen erkennbar, in denen zeigen:
- Fig. A: ein Blockschaltbild einer klassischen Magnetventilansteuerung;
- Fig. 1: eine Seitenansicht eines Magnetventils mit aufgestecktem Magnetventil-Adapter;
- Fig. 2: eine Draufsicht auf ein Magnetventil mit aufgestecktem Magnetventil-Adapter;
- Fig. 3: eine Frontalansicht eines beispielhaften Magnetventil-Adapters;
- Fig. 4: eine Seitenansicht des beispielhaften Magnetventil-Adapters;
- Fig. 5: eine Schrägansicht eines weiteren beispielhaften Magnetventil-Adapters;
- Fig. 6: den in seine Komponenten zerlegten weiteren beispielhaften Magnetventil-Adapter;
- Fig.7: eine Schnittansicht eines Magnetventils mit Steckanschluss;
- Fig. 8: ein Blockschaltbild einer Magnetventilansteuerung über einen LIN-Bus;
- Fig. 9: ein Blockschaltbild einer Magnetventilansteuerung über eine PWM-Schnittstelle;
- Fig. 10(a): ein Blockschaltbild einer diskreten Anordnung der LIN-Adapterkomponenten;
- Fig. 10(b): ein Blockschaltbild einer System on a Chip- Anordnung der LIN-Adapterkomponenten;
- Fig. 11(a): ein Blockschaltbild einer diskreten Anordnung der PWM-Adapterkomponenten;
- Fig. m(b): ein Blockschaltbild einer System on a Chip- Anordnung der PWM-Adapterkomponenten;

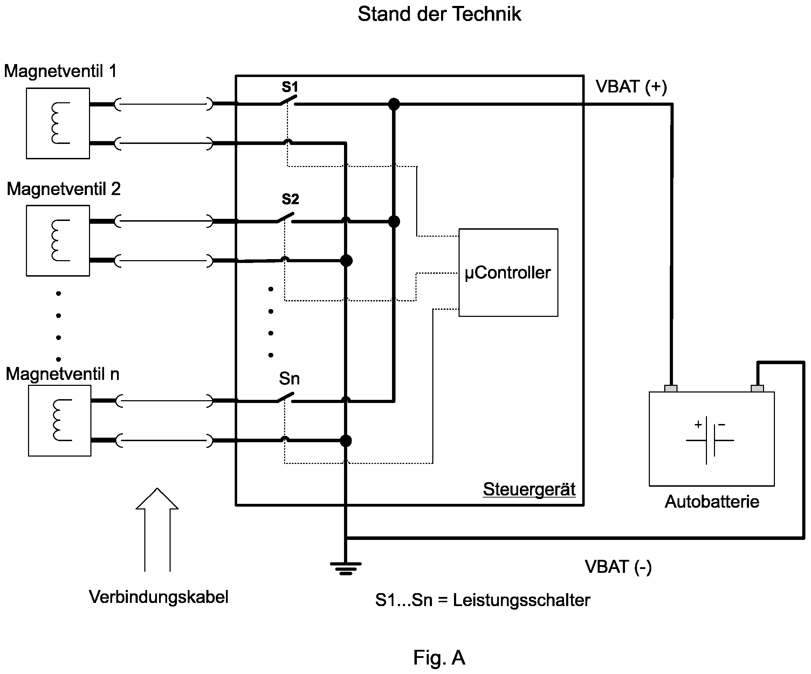

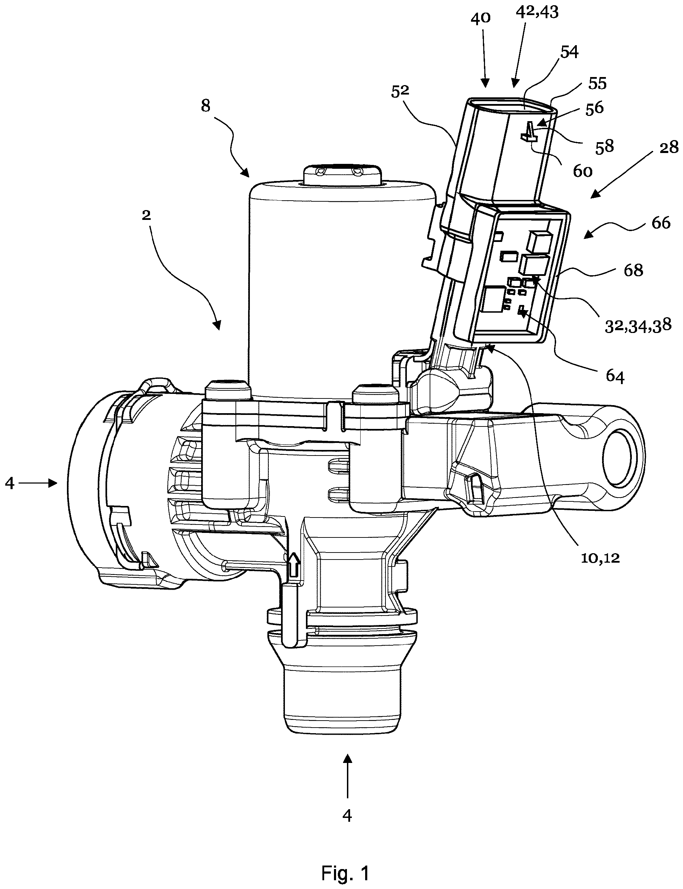

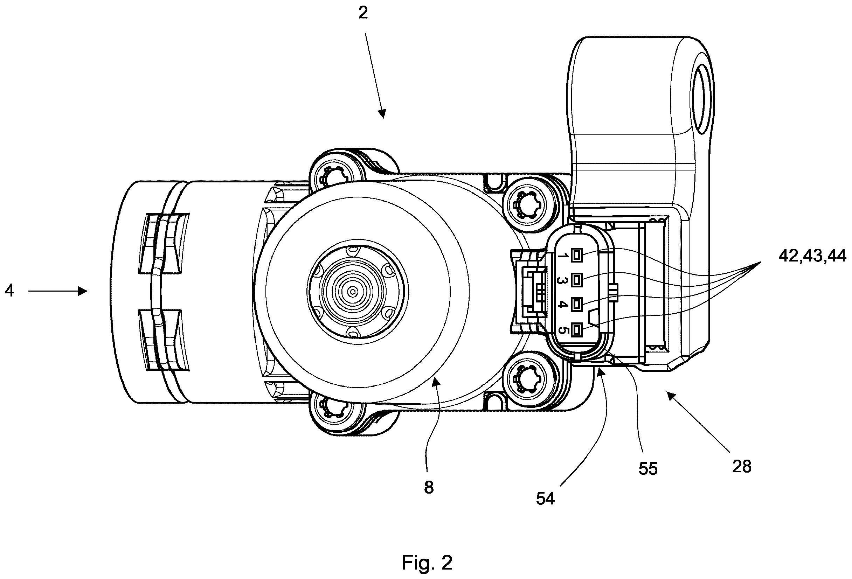

Die Figuren 1 und 2 zeigen einen über den Magnetventilanschluss 62 auf einen Steckanschluss 10 eines Magnetventils 2 aufgesteckten Magnetventil-Adapter 28. Die steuergerätseitige Steckeraufnahme 54 des Adapters für den Daten-bzw. Leistungseingang 40, 42 kann beispielsweise drei oder wie in Figur 2 dargestellt beispielsweise vier Pole aufweisen, je nachdem, ob zusätzlich zum Dateneingang 42 ein Datenausgang 43 vorgesehen ist, über welchen Signale, beispielsweise betreffend den zur Beaufschlagung der in der elektromagnetischen Antriebseinheit 8 aufgenommenen Magnetspule 14 verwendeten zeitlichen Stromstärkeverlauf, vom Adapter 28 über den seriellen Kommunikationsbus an das übergeordnete Steuergerät 20 gesendet werden können. Zum korrekten Anschließen eines Steckers an die Steckeraufnahme 54 des Adapters 28 weist der Adapter 28 innerhalb einer Umrandung 55 der Steckeraufnahme 54 einen Vorsprung auf, welche mit einem komplementären Gegenelement am anzuschließenden Stecker ein Anschließen des Steckers in nur einer Verdrehposition zulässt.

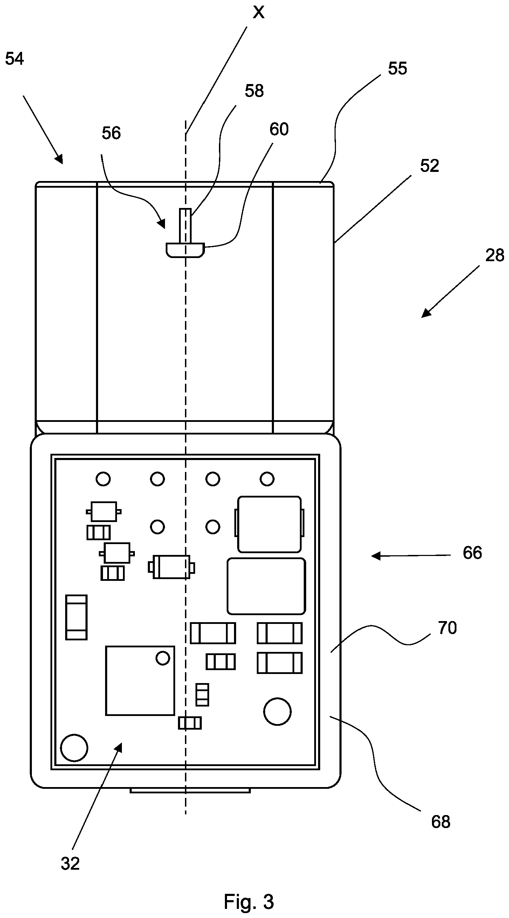

Der in Figur 3 dargestellte Magnetventil-Adapter 28 umfasst ein Adaptergehäuse 52, welches an seiner Oberseite die Steckeraufnahme 54 zum Verbinden des Adapters 28 mit dem übergeordneten Steuergerät 20 einerseits und zur Herstellung einer Verbindung mit der Autobatterie 22 andererseits aufweist. Zum Festlegen eines kompatiblen Anschlusssteckers an dem Adapter 28 weist dieser eine Rastnase 56 auf, welche eine Anlaufschräge 58 und eine Rastplatte 60 umfasst, die bei angeschlossenem Stecker durch ein komplementäres Element des Steckers hintergriffen wird. Insbesondere ist zu erkennen, dass die in der Hauptachse X liegende Anlaufschräge 58 und die sich senkrecht zur Hauptachse X erstreckende Rastplatte 60 T-förmig zueinander angeordnet sind. Am unteren Ende des Adaptergehäuses 52 angeordnet ist der Magnetventilanschluss 62. In dem Adaptergehäuse 52 aufgenommen ist ferner die Elektronikkomponente, umfassend eine Leiterplatte 64 mit darauf aufgelöteten Hardwarekomponenten wie beispielsweise einem Microcontroller und/oder einem Transceiver. Zur Aufnahme der Leiterplatte 64 weist der Magnetventil-Adapter 28 eine Aufnahmekammer 66 auf, welche mittels eines Deckels 68, der vorzugsweise transparent ist, verschließbar ist, beispielsweise durch eine Clipverbindung oder eine Klebeverbindung. Die Aufnahmekammer 66 umfasst einen insbesondere rechteckigen Grundriss und eine diesen Grundriss beziehungsweise den Kammerboden mit einer Dicke D umgebende Wandung 70 mit einer Höhe H. Der Deckel 68 weist umlaufend eine abgekantete Umrandung auf, welche bei mit dem Deckel 68 verschlossener Aufnahmekammer 66 in etwa senkrecht auf einer Oberseite der Wandung 70 aufliegt. An einem oberen Ende der Leiterplatte 64 sind beispielsweise fünf oder sechs die Leiterplatte 64 durchgreifende Kontaktöffnungen 72 eingebracht, welche zum elektrischen Kontaktieren der eingangsseitigen und ausgangsseitigen Daten- beziehungsweise Stromleiter 73, 74, 76, 78, 80 mit der Leiterplatte 64 dienen.

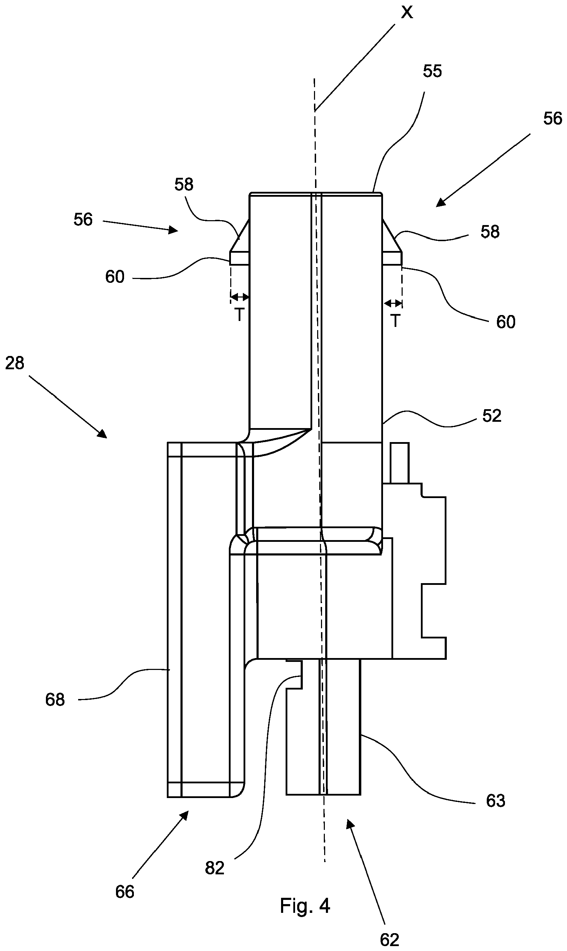

Wie in der in Figur 4 gezeigten Seitenansicht des Magnetventil-Adapters 28 dargestellt sind die Steckeraufnahme 54 und der Magnetventilanschluss 62 an gegenüberliegenden Enden des Adapters 28 angeordnet und erstrecken sich entlang einer Hauptachse X des Adapters 28 in gegenläufiger Richtung voneinander weg. Ferner ist zu sehen, dass sich die Aufnahmekammer 66 zur Aufnahme der Hardwarekomponenten L-förmig von der Hauptachse X des Adapters 28 weg erstreckt und abschnittsweise parallel beabstandet zum Magnetventilanschluss 62 verläuft. Der Magnetventilanschluss 62 weist ein Steckstück 63 mit einer asymmetrischen Außenkontur sowie eine im Wesentlichen senkrecht zur Hauptachse X beziehungsweise senkrecht zur Einsteckrichtung des Adapters verlaufende Rastnut 82 auf, welche im Zusammenwirken mit einem komplementären Gegenverbinder, vorzugsweise eine Rastnase, innerhalb des am Magnetventil 2 angeordneten Steckanschlusses 10 zum Festlegen des Adapters 28 am Magnetventil 2 dient. Außerdem zu erkennen sind die beidseitig gegenüberliegend am Adaptergehäuse 52 angeordneten Rastnasen 56 mit jeweiligen Anlaufschrägen 58 und Rastplatten 60. Die Rastnasen 56 sind unterhalb der Oberseite des Adaptergehäuses 52 angeordnet, wobei sich die Rastplatten 60 um eine Höhe T senkrecht zur Hauptachse X vom Adaptergehäuse 52 weg erstrecken, wobei die Anlaufschrägen 58 in Aufsteckrichtung eines Steckers vor den Rastplatten 60 angeordnet sind. Die Anlaufschrägen 58 beginnen an ihrem oberen Ende auf Höhe der Adaptergehäuseoberfläche, steigen linear bis zur Höhe T der Rastplatten 60 an und schließen bündig mit diesen ab. Weiterhin ist zu erkennen, dass die Steckeraufnahme 54, die Rastnasen 56, die Aufnahmekammer 66 sowie der Magnetventilanschluss 62 integral mit dem Gehäuse 52 ausgeführt sind. Somit wird eine für beliebige Bussysteme programmierbare und an diese anschließbare Schnittstelle bereitgestellt, welche in einfacher Weise auf "klassische", insbesondere bereits verbaute, Magnetventile 2 aufgesteckt werden kann.

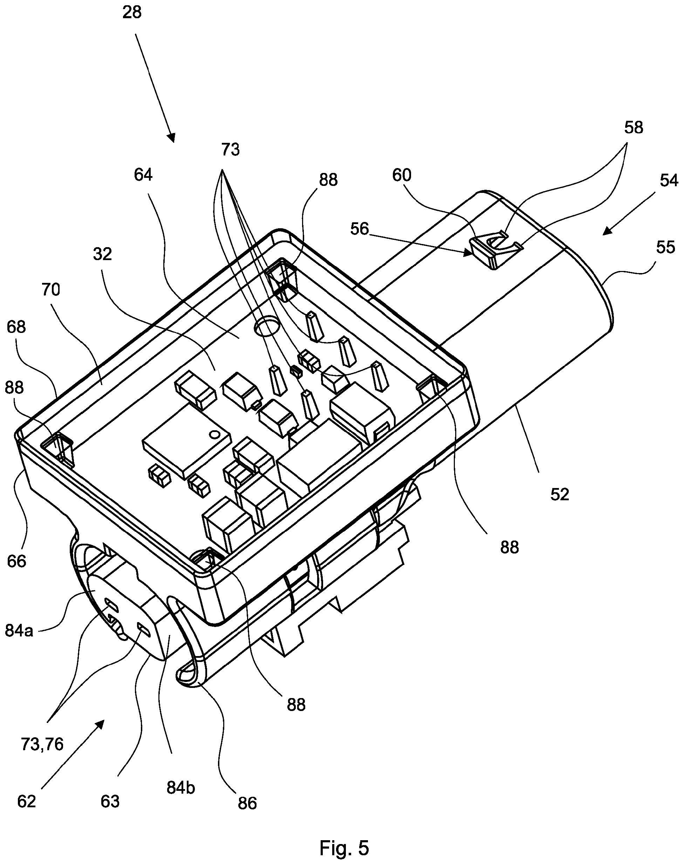

Der in Figur 5 dargestellte Magnetventil-Adapter 28 weist eine alternative Ausführungsform einer Rastnase 56 auf, wobei diese statt nur einer Anlaufschräge 58 zwei Anlaufschrägen 58 aufweist, welche voneinander beanstandet in äußere Endabschnitte der Rastplatte 60 münden. Der am unteren Ende des Magnetventil-Adapters 28 dargestellte zweipolige Magnetventilanschluss 62 weist für ein korrektes Anschließen des Adapters 28 an ein Magnetventil 2 jeweils voneinander abweichend ausgeformte Seitenabschnitte 84a, 84b auf, wobei einer der Abschnitte 84a eine abgerundete Außenkontur aufweist und der jeweils andere Abschnitt 84b abgeflacht ist. Dadurch ist gewährleistet, dass der Adapter 28 nur in einer einzigen Verdrehposition an den Steckanschluss 10 des Magnetventils 2 angeschlossen werden kann. Im Magnetventilanschluss 62 sind zudem sichtbar die beiden elektrischen Leiter 73 zum Kontaktieren des elektrischen Signaleingangs 12 des Magnetventils 2 aufgenommen, welche an ihren jenseitigen Enden in die entsprechend für sie vorgesehenen Kontaktöffnungen 72 der Leiterplatte 64 münden. Die dargestellte Ausführungsform des Adapters 28 weist ferner einen den Magnetventilanschluss 62 beabstandet entsprechend der Außenkontur des Magnetventilanschlusses 62 umlaufenden Käfig 86 auf, welcher das Aufstecken des Adapters 28 erleichtert und für eine sichere Verbindung des Adapters 28 mit dem magnetventilseitigen Steckanschluss dient. In der dargestellten Ausführungsform weist das Verschlusselement 68 sich vom Verschlusselement senkrecht in Richtung des Bodens der Aufnahmekammer 66 erstreckende Niederhalter 88 auf, welche einerseits als Positionierhilfe für das Verschlusselement 68 dienen und andererseits die Leiterplatte 64 in der Aufnahmekammer 66 fixieren. Die Niederhalter 88 sind dergestalt an das Verschlusselement 68 angeformt, dass diese jeweils innerhalb von Eckbereichen der die Aufnahmekammer 66 umgebenden Wandung 70 anliegen und somit das Verschlusselement 68 positionieren. Bei wie dargestellt vollständig zusammengesetztem Adapter 28 durchgreifen die eingangs- und ausgangsseitigen Leistungs- und Datenleiter 74, 76, 78, 80 die Kontaktöffnungen 72 der in der Aufnahmekammer 66 fixierten Leiterplatte 64. Dadurch wird eine elektrische Kontaktierung der Leiter 74, 76, 78, 80 mit der Leiterplatte 64 hergestellt, ferner wird die Leiterplatte 64 durch die durch sie hindurchgreifenden Kontakte in der Aufnahmekammer 66 positioniert und in dieser Position fixiert.

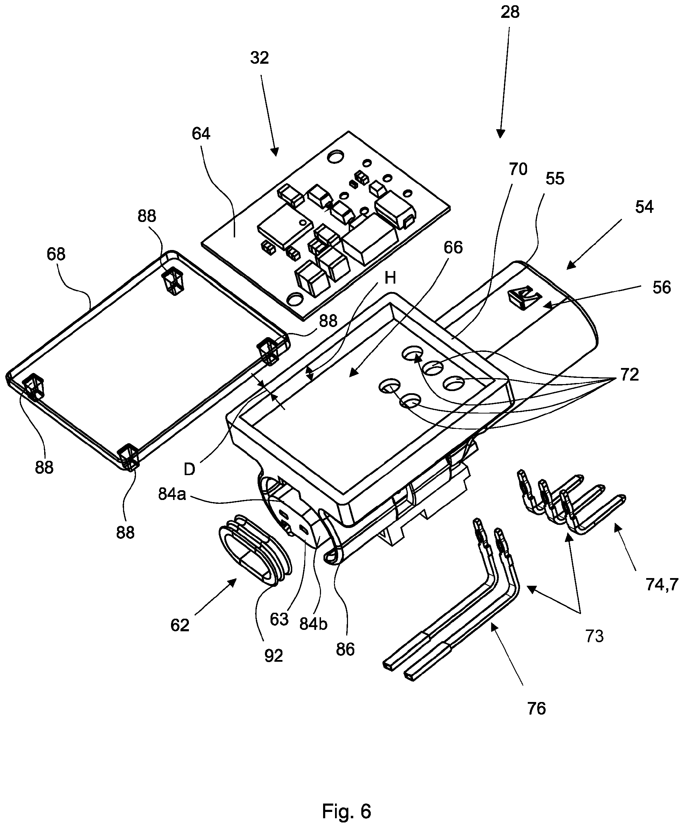

Aus der in Figur 6 gezeigten Explosionsdarstellung der Einzelelemente des Adapters ist ersichtlich, dass die Aufnahmekammer 66 zu den Kontaktöffnungen 72 der Leiterplatte 64 entsprechend positionierte bodenseitige Durchtrittsöffnungen 90 aufweist, durch welche ein elektrischer Kontakt zwischen dem Mikrocontroller 32 beziehungsweise dem Transceiver 34, 38 und den eingangs-sowie ausgangsseitigen Daten- beziehungsweise Leistungskabeln 74, 76, 78, 80 realisiert wird. Die Leiterplatte 64 wird dabei einerseits durch die durch ihre Kontaktöffnungen 72 hindurchtretenden Kontakte und andererseits durch die an das Verschlusselement 68 angeformten Niederhalter 88 in der Aufnahmekammer 66 fixiert. In der dargestellten Ausführungsform weist der Magnetventilanschluss 62 ferner ein an seine Außenkontur angepasstes und wahlweise mit Lamellen versehenes Dichtelement 92 auf, mittels welchem die Adapter-Magnetventil-Verbindung gegenüber Feuchtigkeit geschützt ist.

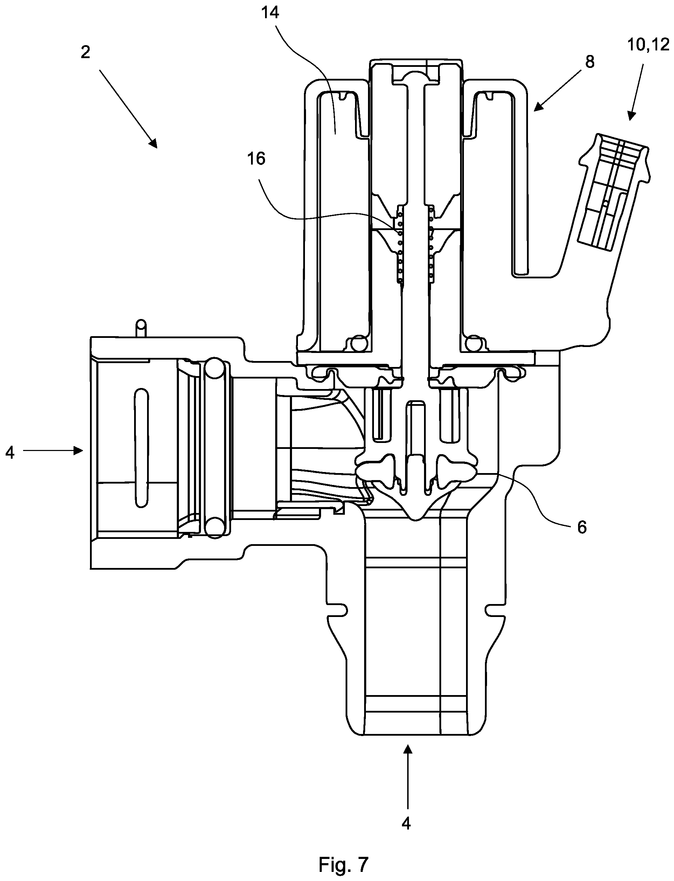

Figur 7 zeigt eine Querschnittsdarstellung eines "klassischen" Magnetventils 2 mit einer Fluidleitung 4, einem Stellglied 6 und einer elektromagnetischen Antriebseinheit beziehungsweise Betriebselement 8, mittels welchem das Magnetventil 2 angesteuert wird. Magnetventile kommen in Kraftfahrzeugen insbesondere in Kühlkreisläufen oder auch als Schubumluftventile für Turbolader zum Einsatz. Zur Ansteuerung des Magnetventils 2 weist die elektromagnetische Antriebseinheit 8 im Wesentlichen einen Steckanschluss 10 mit einem analogen elektrischen Signaleingang 12 und eine Magnetspule 14 zum Betätigen des Stellglieds 6 auf. Das Stellglied 6 kann dabei von einer geschlossenen Position, in der das Stellglied 6 die Fluidleitung 4 verschließt, in eine geöffnete Position, in der das Stellglied 6 die Fluidleitung 4 freigibt, überführt werden. Ferner weist das Stellglied 6 eine Druckfeder 16 auf, mittels welcher das Stellglied 6 in einer Ausgangsstellung in der Schließposition gehalten wird. Bei Beaufschlagung der Magnetspule 14 mit einer Spannung über den elektrischen Signaleingang 12 wirkt die durch den induktiven Effekt erzeugte Kraft auf das Stellglied 6 entgegen der Kraft der Druckfeder 16, so dass das Stellglied 6 von der geschlossenen Position in die geöffnete Position überführt wird. Die für das Öffnen des Ventils 2 notwendige Kraft wird über die am elektrischen Signaleingang 12 angelegte Stromstärke eingestellt und hängt neben der Druckfederkonstante außerdem von weiteren Betriebsparametern wie beispielsweise der Fluidtemperatur, dem Fluiddruck oder der Ventilstellung, das heißt der aktuellen Position des Stellglieds 6, ab.

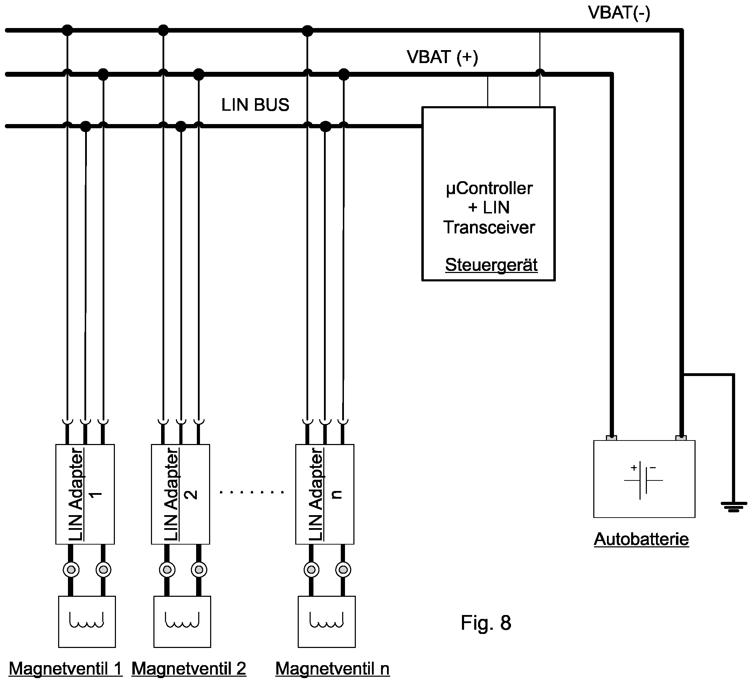

Das Blockschaltbild in Figur 8 zeigt eine erfindungsgemäße Anordnung zum Ansteuern von "klassischen" Magnetventilen 2. Anders als in der in Figur A dargestellten Anordnung ist hierbei nicht jedes Magnetventil 2 an einen separaten Leistungsausgang 18 des Steuergeräts angeschlossen, sondern die Ventile 2 sind über jeweils auf die Ventile 2 aufgesteckte Magnetventil-Adapter 28 zum einen mit einem LIN-Kommunikationsbus eines übergeordneten Steuergeräts 20 verbunden, zum andern ist jedes der Magnetventile 2 separat an die Leistungsversorgung der Autobatterie 22 des Kraftfahrzeugs angeschlossen. Vorteilhaft ist dabei insbesondere, dass für sämtliche Magnetventile 1 bis N nur eine einzige Datenschnittstelle 30 des Steuergeräts 20 bereitgestellt werden muss. Die gezeigten Magnetventil-Adapter 28 weisen jeweils einen Mikrocontroller 32 sowie einen Transceiver 34 zum Empfangen und Senden von Daten auf, wobei die Transceiver 34 über den LIN-Kommunikationsbus spezifische Steuersignale vom Steuergerät 20 für das jeweilige Magnetventil 2 erhalten, welche vom Mikrocontroller 32 über einen anwendungsbezogenen Algorithmus in entsprechende elektrische Ausgangssignale zur Übermittlung an die jeweiligen elektrischen Signaleingänge 12 der Magnetventile 2 übermittelt werden. Die vom Steuergerät 20 übermittelten Steuersignale können dabei unter anderem Sensordaten zu Betriebsparametern des jeweiligen Kühlkreislaufs aufweisen, in welchen die Magnetventile 2 eingebettet sind, wie beispielsweise einen Kühlmitteldruck oder eine Kühlmitteltemperatur. Während die Magnetventil-Adapter 28 die zum Ansteuern der Magnetventile 2 notwendigen Datensignale über den seriellen Kommunikationsbus vom Steuergerät 20 erhalten, beziehen die Adapter 28 die notwendige Leistung zum Übertragen der errechneten elektrischen Ausgangssignale unmittelbar von der Autobatterie 22. Ein weiterer Vorteil neben der verringerten Belegung von Steuergerätausgängen 18, 30 besteht darin, dass die Magnetventile 2 im Vergleich zu der Anordnung gemäß Figur A nicht konstant mit dem Maximalstrom beaufschlagt werden, sondern die Mikrocontroller 24 aufgrund der Übermittlung von Betriebsparametern durch das Steuergerät 20 und der stetigen Anpassung daran in Form einer Regelung nunmehr elektrische Ausgangssignale in der tatsächlich für das Öffnen der Magnetventile 2 benötigten Stromstärke bereitstellen können. Dies führt neben einer Stromersparnis außerdem zu einem verringerten Verschleiß der Magnetventile 2.

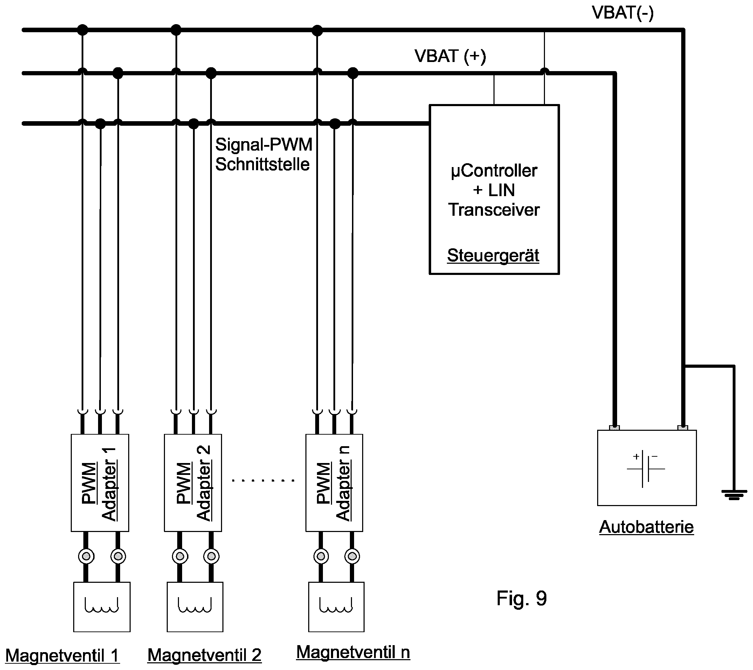

In Figur 9 ist eine weitere Ausführungsform zur Ansteuerung von Magnetventilen 2 dargestellt, wobei der Unterschied zu der in Figur 8 dargestellten Anordnung darin besteht, dass die Magnetventil-Adapter 28 nicht über einen LIN-Kommunikationsbus mit dem Steuergerät verbunden sind, sondern durch Pulsweitenmodulation (PWM) vom Steuergerät 20 angesteuert werden. Dazu weist das Steuergerät eine Pulsweitenmodulationsschnittstelle 36 auf, an die ein serieller Kommunikationsbus angeschlossen ist, an welchen wiederum jeweils die den jeweiligen Magnetventilen 2 zugeordnete PWM-Adapter 28 über eine Datenleitung angeschlossen sind.

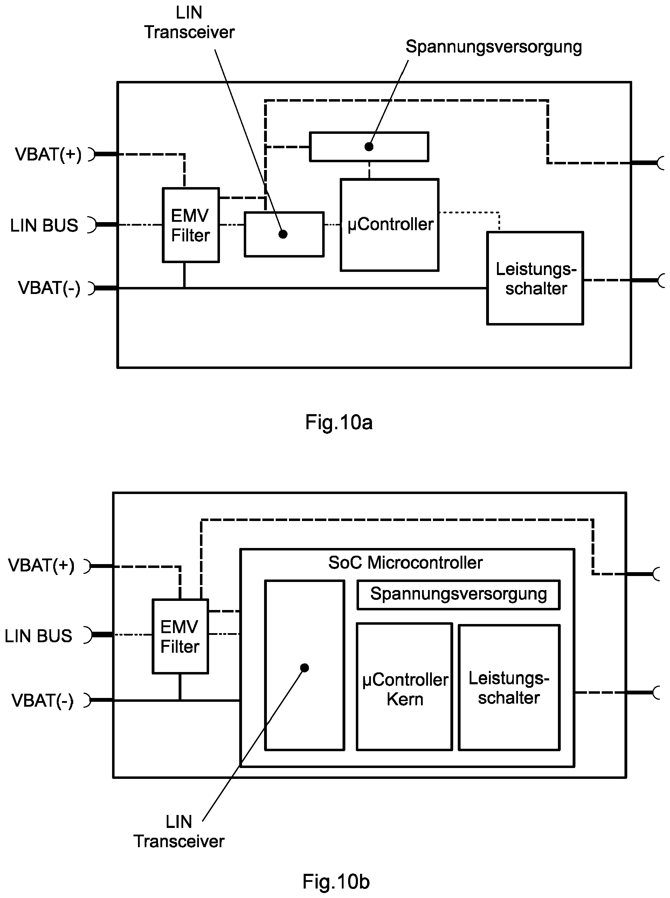

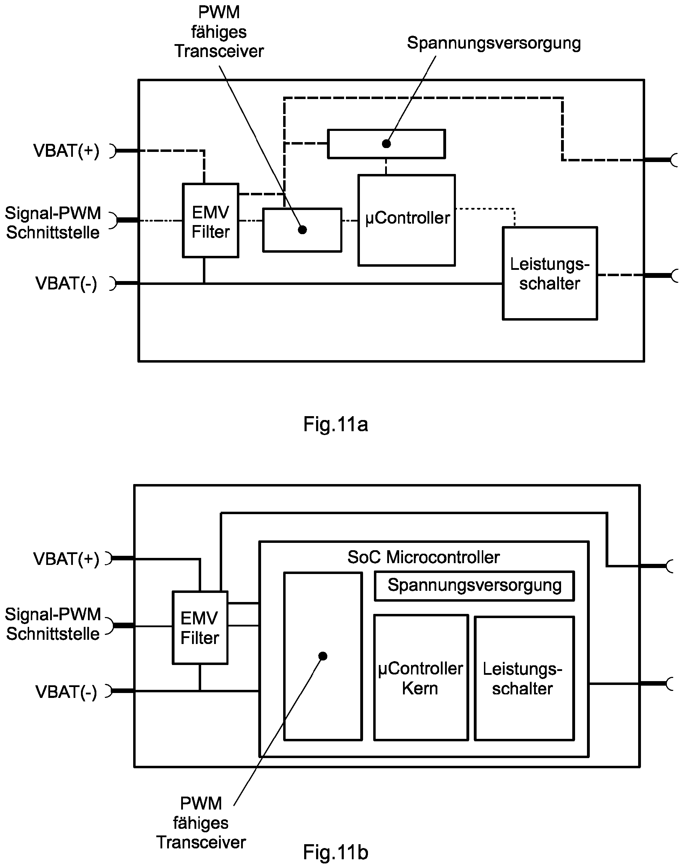

In den Figuren 10(a) bis 11(b) sind unterschiedliche Ausführungsformen der Elektronikkomponente beziehungsweise der Adapter-Hardwarekomponenten in Blockschaltbild-Darstellung aufgeführt. Die Figuren 10(a) und 10(b) zeigen dabei jeweils einen Magnetventil-Adapter mit einer Elektronikkomponente, die einen LIN-fähigen Transceiver 34 aufweist, die Figuren 11(a) und 11(b) einen Adapter mit einer Elektronikkomponente, die einen PWM-fähigem Transceiver 38 aufweist. Die in den Figuren 10(a) und 11(a) dargestellten Ausführungsformen zeigen Anordnungen mit diskreten Komponenten, die in den Figuren 10(b) und 11(b) dargestellten Ausführungsformen weisen alternativ einen "System on a Chip" (SoC)-Mikrocontroller 24 auf. Die Ausführungsformen umfassen eingangsseitig jeweils einen Anschluss beziehungsweise Leistungseingang 40 zum Verbinden mit einem positiven Pol der Autobatterie 22, einen Anschluss beziehungsweise Leistungseingang 40 zum Verbinden mit einem negativen Pol der Autobatterie 22 sowie einen Anschluss beziehungsweise Dateneingang 42 an die serielle Kommunikationsleitung, beispielsweise an einen LIN-Bus oder eine Signal-PWM Schnittstelle, auf. Der Adapter kann zusätzlich eine Datenausgangsschnittstelle 43 zum Senden von Daten an das übergeordnete Steuergerät 20 aufweisen. Als weitere Komponenten kann der Adapter 28 einen Elektromagnetische Verträglichkeit (EMV)-Filter 46, einen LIN- oder PWM-fähigen Transceiver 34, 38, eine Spannungsversorgung 48, einen Mikrocontroller 32 sowie einen Leistungsschalter 26 aufweisen. In den SoC-Ausführungsformen sind dabei jeweils die Transceiver 34, 38, die Spannungsversorgung 48, der Mikrocontroller-Kern 32 sowie der Leistungsschalter 26 auf einem Chip 50 integriert. Alle Ausführungsformen weisen ausgangsseitig zum Ansteuern der Magnetventile 2 einen positiven und einen negativen Pol beziehungsweise einen Leistungsausgang 44 auf.

**Bezugszeichenliste**

| | |
|---|---|
| Magnetventil | 2 |
| Fluidleitung | 4 |
| Stellglied | 6 |
| Elektromagnetische Antriebseinheit | 8 |
| Steckanschluss | 10 |
| elektrischer Signaleingang | 12 |
| Magnetspule | 14 |
| Druckfeder | 16 |
| Leistungsausgang Steuergerät | 18 |
| Steuergerät | 20 |
| Autobatterie | 22 |
| Microcontroller Steuergerät | 24 |
| Leistungsschalter | 26 |
| Magnetventil-Adapter | 28 |
| Datenschnittstelle Steuergerät | 30 |
| Elektronikkomponente/Microcontroller Adapter | 32 |
| LIN-Transceiver | 34 |
| Pulsweitenmodulationsschnittstelle | 36 |
| PWM-Transceiver | 38 |
| Leistungseingang | 40 |
| Dateneingang | 42 |
| Datenausgang | 43 |
| Leistungsausgang | 44 |
| EMV-Filter | 46 |
| Spannungsversorgung | 48 |
| SoC-Chip | 50 |
| Adaptergehäuse | 52 |
| Steckeraufnahme | 54 |
| Umrandung Steckeraufnahme | 55 |
| Rastnase | 56 |
| Anlaufschräge | 58 |
| Rastplatte | 60 |
| Magnetventilanschluss | 62 |
| Männliches Steckstück | 63 |
| Leiterplatte | 64 |
| Aufnahmekammer | 66 |
| Deckel | 68 |
| Wandung | 70 |
| Kontaktöffnungen | 72 |
| Elektrische Leitungen | 73 |
| Stromeingangsleiter | 74 |
| Stromausgangsleiter | 76 |
| Dateneingangsleiter | 78 |
| Datenausgangleiter | 80 |
| Rastnut | 82 |
| Seitenabschnitte Magnetventilanschluss | 84a, 84b |
| Käfig | 86 |
| Niederhalter | 88 |
| Durchtrittsöffnungen | 90 |
| Dichtelement | 92 |
| Hauptachse | X |
| Dicke Wandung | D |
| Höhe Wandung | H |
| Höhe Rastplatte | T |

## Patentansprüche

1. Steckadapter (28) zum Anschließen an ein insbesondere bereits in einem Kraftfahrzeug montiertes Magnetventil (2), das einen Steckanschluss (10) zum Empfangen eines elektrischen Steuersignals eines Steuergeräts (20) des Kraftfahrzeugs zum Betreiben des Magnetventils (2) aufweist, wobei der Steckadapter umfasst:
- einen Magnetventilanschluss (62) für eine lösbare Koppelung des Steckadapters (28) an den Steckanschluss (10) des Magnetventils (2), wobei der Magnetventilanschluss (62) und der Steckanschluss (10) hinsichtlich Steckform und elektrischer Signalübertragung aufeinander abgestimmt sind,
- eine Elektronikkomponente (32), insbesondere einen Microcontroller, zum Verarbeiten eines elektrischen Ausgangssignals zum Betreiben des Magnetventils (2),
- eine fluiddichte Aufnahmekammer (66) mit einem insbesondere rechteckigen Grundriss und mit einer den Grundriss umgebenden Wandung (70) sowie einem transparenten Deckel (68),
wobei
- die Elektronikkomponente (32) in der Aufnahmekammer (66) aufgenommen ist,
die Aufnahmekammer (66) mittels des Deckels (68) fluiddicht verschließbar oder verschlossen ist, und
- im gesteckten Zustand des Steckadapters (28) an den Steckanschluss (10) eine elektrische Verbindung zwischen der Elektronikkomponente (32) und dem Magnetventil (2) über den Magnetventilanschluss (62) aufgebaut ist.

2. Steckadapter (28) nach Anspruch 1, **dadurch gekennzeichnet, dass** der Magnetventilanschluss (62) ein insbesondere männliches Steckstück (63) zum insbesondere nur in einer Verdrehposition möglichen Stecken in ein insbesondere weibliches Gegenstück des Steckanschlusses (10) des Magnetventils (2) aufweist, wobei insbesondere an dem Steckstück (63) eine Rastnut (82), insbesondere senkrecht zu einer Steckrichtung, zum Verrasten mit einer komplementären Rastnase in dem Gegenstück ausgebildet ist.

3. Steckadapter (28) nach Anspruch 2, **dadurch gekennzeichnet, dass** im und/oder am Steckabschnitt (63) zum elektrischen Verbinden der Elektronikkomponente (32) mit dem Magnetventil (2) zumindest eine elektrische Leitung (73) aufgenommen ist.

4. Steckadapter (28) nach einem der vorstehenden Ansprüche, **dadurch gekennzeichnet, dass** sich die Aufnahmekammer (66) im Wesentlichen in einer Ebene parallel zu einer Steckrichtung des Adapters (28) erstreckt und/oder die Elektronikkomponente (32) in einer Ebene parallel zur Steckrichtung des Adapters (28) und beabstandet vom Steckstück (63) in der Aufnahmekammer (66) aufgenommen und/oder fixiert ist.

5. Steckadapter (28) nach einem der vorstehenden Ansprüche, **dadurch gekennzeichnet, dass** in einem Kammerboden der Aufnahmekammer (66) zumindest eine Durchgangsöffnung (90) zur Kabeldurchführung der zumindest einen elektrischen Leitung (73) und/oder zumindest einem Datenübertragungsleiter (78, 80) angeordnet ist.

6. Steckadapter (28) nach einem der vorstehenden Ansprüche, **dadurch gekennzeichnet, dass** eine Leiterplatte der Elektronikkomponente (32) Durchgangsöffnungen (90) aufweist, in welche die elektrischen Leitungen (73) und/oder zumindest ein Datenübertragungsleiter (78, 80) eingesteckt sind, wodurch die Leiterplatte in der Aufnahmekammer (66) des Adapters (28) gehalten ist.

7. Steckadapter (28) nach einem der Ansprüche 1 bis 3, **dadurch gekennzeichnet, dass** der Deckel (68) an seiner der Aufnahmekammer (66) zugewandten Seite zumindest einen Niederhalter (88) aufweist, mittels welchem die Elektronikkomponente (32) in der Aufnahmekammer (66) fixierbar ist.

8. Steckadapter (28) nach einem der vorstehenden Ansprüche, **dadurch gekennzeichnet, dass** der Steckadapter (28) zum Anschließen des Steckadapters (28) an ein übergeordnetes Steuergerät (20) über ein serielles Bussystem und/oder zum Anschließen des Steckadapters (28) an eine Autobatterie (22) des Kraftfahrzeugs eine an einen Stecker der Bus-Kommunikationsleitung des Bussystems und/oder einer mit der Autobatterie (22) verbundenen elektrischen Leitung (73) angepasste Steckeraufnahme (54) aufweist, mit welcher der Stecker der Bus-Kommunikationsleitung und/oder der elektrischen Leitung (73) elektrisch und/oder mechanisch gekoppelt oder koppelbar ist.

9. Steckadapter (28) nach Anspruch 8, **dadurch gekennzeichnet, dass** in der Steckeraufnahme (54) zumindest ein Datenübertragungsleiter (78, 80) zur Herstellung einer Datenschnittstelle zwischen dem übergeordneten Steuergerät (20) und der Elektronikkomponente (32) sowie zumindest eine elektrische Leitung (73) zur Herstellung einer elektrischen Spannungsversorgung zwischen einer Autobatterie (22) des Kraftfahrzeugs und der Elektronikkomponente (32) aufgenommen ist.

10. Steckadapter (28) nach einem der vorstehenden Ansprüche, **dadurch gekennzeichnet, dass** der Steckadapter (28) ein Gehäuse (52) aufweist, wobei der Magnetventilanschluss (62) und/oder die Aufnahmekammer (66) und/oder die Steckeraufnahme (54) integral mit dem Gehäuse (52) ausgebildet sind.

11. Steckadapter (28) nach Anspruch 10, **dadurch gekennzeichnet, dass** das Gehäuse (52) sich entlang einer in Steckrichtung des Steckadapters (28) orientierten Hauptachse (X) erstreckt, wobei der Magnetventilanschluss (62) und die Steckeraufnahme (54) voneinander wegweisend in der Hauptachse (X) an gegenüberliegenden Enden des Gehäuses (52) angeordnet sind.

12. Steckadapter (28) nach Anspruch 11, **dadurch gekennzeichnet, dass** sich die Aufnahmekammer (66) L-förmig von der Hauptachse (X) des Gehäuses (52) wegerstreckt und zumindest abschnittweise parallel beabstandet zum Steckstück (63) verläuft.

13. Steckadapter (28) nach einem der Ansprüche 10 bis 12, **dadurch gekennzeichnet, dass** das Gehäuse (52) an einem die Steckeraufnahme (54) umgebenden Gehäuseabschnitt zum Verrasten des Steckers der Bus-Kommunikationsleitung zumindest eine hinterschnittige Rastnase (56) aufweist, wobei die Rastnase (56) eine in Aufsteckrichtung des Steckers ansteigende Anlaufschräge (58) sowie eine hinter der Anlaufschräge (58) angeordnete Rastplatte (60) aufweist, welche von einem komplementären Gegenverbinder des Steckers hintergreifbar ist.

14. Steckadapter (28) nach Anspruch 13, **dadurch gekennzeichnet, dass** die Elektronikkomponente (32) dazu eingerichtet ist, im gekoppelten Zustand des Steckadapters (28) an das Steuergerät (20) über die Bus-Kommunikationsleitung zumindest ein Bus-Signal vom Steuergerät (20) zu empfangen und dieses zumindest eine Bus-Signal in zumindest ein elektrisches Steuersignal zum Ansteuern des Magnetventils (2) umzuwandeln, und das elektrische Steuersignal von der Elektronikkomponente (32) an das Magnetventil (2) zu übermitteln.

15. Magnetventil (2), insbesondere bereits in einem Kraftfahrzeug montiert, das einen Steckanschluss (10) zum Empfangen eines elektrischen Steuersignals eines Steuergeräts (20) des Kraftfahrzeugs zum Betreiben des Magnetventils (2) umfasst, umfassend einen nach den Ansprüchen 1 bis 14 ausgebildeten Steckadapter (28).

16. Magnetventil (2) nach Anspruch 15, **dadurch gekennzeichnet, dass** der Steckanschluss (10) zum Bereitstellen einer Clipverbindung mit dem Magnetventilanschluss (62) eine Rastnase aufweist, die zum Eingreifen in die Rastnut (82) des Steckabschnitts (63) ausgebildet ist.

17. Magnetventil (2) nach Anspruch 15 oder 16, **dadurch gekennzeichnet, dass** das Magnetventils (2) ferner einen Stellantrieb mit einem elektromagnetisch betätigbaren Stellglied (6) und einer Magnetspule (14) aufweist, welche mittels des elektrischen Steuersignals ansteuerbar ist.

18. Magnetventil (2) nach Anspruch 17, **dadurch gekennzeichnet, dass** das Stellglied (6) des Magnetventils (2) das Magnetventil (2) in seiner Ausgangsposition verschließt und infolge einer Ansteuerung des Magnetventils (2) mittels eines elektrischen Steuersignals öffenbar ist.

19. Anordnung aus einem Steuergerät (20) und einem insbesondere bereits in einem Kraftfahrzeug montierten Magnetventil (2), wobei das Magnetventil (2) einen Steckanschluss (10) (12) zum Empfangen eines elektrischen Steuersignals eines Steuergeräts (20) des Kraftfahrzeugs zum Betreiben des Magnetventils (2) umfasst, umfassend einen nach den Ansprüchen 1 bis 14 ausgebildeten Steckadapter (28).

20. Kühlkreislauf oder Turboladerkreislauf für ein Kraftfahrzeug mit einer Anordnung nach Anspruch 19.

## Claims

1. Plug adapter (28) for connection to a solenoid valve (2), in particular one already mounted in a motor vehicle, which has a plug connector (10) for receiving an electrical control signal from a control unit (20) of the motor vehicle for operating the solenoid valve (2), the plug adapter comprising:
- a solenoid valve connector (62) for releasably coupling the plug adapter (28) to the plug connector (10) of the solenoid valve (2), wherein the solenoid valve connector (62) and the plug connector (10) are matched to one another in terms of plug shape and electrical signal transmission,
- an electronic component (32), in particular a microcontroller, for processing an electrical output signal for operating the solenoid valve (2),
- a fluid-tight receptacle chamber (66) with a particularly rectangular outline and with a wall (70) surrounding the outline and a transparent lid (68),
wherein
- the electronic component (32) is received in the receptacle chamber (66),
the receptacle chamber (66) is closable or closed by means of the lid (68) in a fluid-tight manner, and
- when the plug adapter (28) is plugged into the plug connector (10), an electrical connection is established between the electronic component (32) and the solenoid valve (2) via the solenoid valve connector (62).

2. Plug adapter (28) according to claim 1, **characterized in that** the solenoid valve connector (62) comprises a particularly male plug piece (63) for plugging into a particularly female mating piece of the plug connector (10) of the solenoid valve (2), that is particularly only possible in one rotational position, wherein in particular a latching groove (82) is formed on the plug piece (63), in particular perpendicular to a plug direction, for latching with a complementary latching lug in the mating piece.

3. Plug adapter (28) according to claim 2, **characterized in that** at least one electrical lead (73) is accommodated in and/or on the plug section (63) for electrically connecting the electronic component (32) to the solenoid valve (2).

4. Plug adapter (28) according to one of the preceding claims, **characterized in that** the receptacle chamber (66) extends substantially in a plane parallel to a plug direction of the adapter (28) and/or the electronic component (32) is received and/or fixed in the receptacle chamber (66) in a plane parallel to the plug direction of the adapter (28) and spaced from the plug piece (63).

5. Plug adapter (28) according to one of the preceding claims, **characterized in that** at least one through-opening (90) is arranged in a chamber bottom of the receptacle chamber (66) for cable passage of the at least one electrical line (73) and/or at least one data transmission line (78, 80).

6. Plug adapter (28) according to one of the preceding claims, **characterized in that** a circuit board of the electronic component (32) comprises through-holes (90) into which the electrical lines (73) and/or at least one data transmission line (78, 80) are plugged, whereby the circuit board is held in the receptacle chamber (66) of the adapter (28).

7. Plug adapter (28) according to one of claims 1 to 3, **characterized in that** the lid (68) comprises at least one hold-down device (88) on its side facing the receptacle chamber (66), by means of which the electronic component (32) can be fixed in the receptacle chamber (66).

8. Plug adapter (28) according to one of the preceding claims, **characterized in that** the plug adapter (28), for connecting the plug adapter (28) to a higher-level control unit (20) via a serial bus system and/or for connecting the plug adapter (28) to a car battery (22) of the motor vehicle, comprises a plug receptacle (54) adapted to a plug of the bus communication line of the bus system and/or of an electrical line (73) connected to the car battery (22), to which the plug of the bus communication line and/or the electrical line (73) is electrically and/or mechanically coupled or can be coupled.

9. Plug adapter (28) according to claim 8, **characterized in that** at least one data transmission line (78, 80) for establishing a data interface between the higher-level control unit (20) and the electronic component (32) and at least one electrical line (73) for establishing an electrical voltage supply between a car battery (22) of the motor vehicle and the electronic component (32) are accommodated in the plug receptacle (54).

10. Plug adapter (28) according to one of the preceding claims, **characterized in that** the plug adapter (28) comprises a housing (52), wherein the solenoid valve connector (62) and/or the receptacle chamber (66) and/or the plug receptacle (54) are integrally formed with the housing (52).

11. Plug adapter (28) according to claim 10, **characterized in that** the housing (52) extends along a main axis (X) oriented in the direction of insertion of the plug adapter (28), wherein the solenoid valve connector (62) and the plug receptacle (54) are arranged facing away from each other in the main axis (X) at opposite ends of the housing (52).

12. Plug adapter (28) according to claim 11, **characterized in that** the receptacle chamber (66) extends in an L-shape away from the main axis (X) of the housing (52) and extends at least sectionally parallel spaced away from the plug piece (63).

13. Plug adapter (28) according to one of claims 10 to 12, **characterized in that** the housing (52) comprises at least one undercut latching lug (56) on a housing section surrounding the plug receptacle (54) for latching the plug of the bus communication line, the latching lug (56) having an advancing slope (58) rising in the plug-on direction of the plug and a latching plate (60) arranged behind the advancing slope (58), which can be engaged by a complementary mating connector of the plug.

14. Plug adapter (28) according to claim 13, **characterized in that** the electronic component (32) is configured to receive at least one bus signal from the control unit (20) via the bus communication line when the plug adapter (28) is coupled to the control unit (20) and to convert this at least one bus signal into at least one electrical control signal for actuating the solenoid valve (2), and to transmit the electrical control signal from the electronic component (32) to the solenoid valve (2).

15. Solenoid valve (2), in particular already mounted in a motor vehicle, comprising a plug connector (10) for receiving an electrical control signal of a control unit (20) of the motor vehicle for operating the solenoid valve (2), comprising a plug adapter (28) designed according to claims 1 to 14.

16. Solenoid valve (2) according to claim 15, **characterized in that** the plug connector (10) for providing a clip connection to the solenoid valve connector (62) comprises a latching lug configured to engage the latching groove (82) of the plug section (63).

17. Solenoid valve (2) according to claim 15 or 16, **characterized in that** the solenoid valve (2) further comprises an actuator with an electromagnetically operable actuator element (6) and a solenoid coil (14), which is controllable by means of the electrical control signal.

18. Solenoid valve (2) according to claim 17, **characterized in that** the actuator element (6) of the solenoid valve (2) closes the solenoid valve (2) in its initial position and can be opened as a result of actuation of the solenoid valve (2) by means of an electrical control signal.

19. Arrangement comprising a control unit (20) and a solenoid valve (2), in particular already mounted in a motor vehicle, the solenoid valve (2) comprising a plug connector (10) (12) for receiving an electrical control signal from a control unit (20) of the motor vehicle for operating the solenoid valve (2), comprising a plug adapter (28) designed according to claims 1 to 14.

20. Cooling circuit or turbocharger circuit for a motor vehicle comprising an arrangement according to claim 19.

## Revendications

1. Adaptateur de prise (28) pour la connexion à une électrovanne (2) notamment déjà montée sur un véhicule automobile, qui présente un raccord enfichable (10) pour la réception d'un signal de commande électrique d'un dispositif de commande (20) du véhicule automobile pour faire fonctionner l'électrovanne (2), dans lequel l'adaptateur de prise comprenant :
- un raccord d'électrovanne (62) pour un couplage amovible de l'adaptateur de prise (28) au connecteur (10) de l'électrovanne (2), dans lequel le connecteur d'électrovanne (62) et le connecteur enfichable (10) sont adaptés l'un à l'autre en termes de forme enfichable et de transmission de signaux électriques,
- un composant électronique (32), notamment un microcontrôleur, pour traiter un signal de sortie électrique pour faire fonctionner l'électrovanne (2),
- une chambre de réception (66) étanche aux fluides avec un plan de sol notamment rectangulaire et avec une paroi (70) entourant le plan de sol et un couvercle transparent (68),
dans lequel
- le composant électronique (32) est renfermé dans la chambre de réception (66),
- la chambre de réception (66) est fermée de manière étanche aux fluides au moyen du couvercle (68), ou est fermée et
- lorsque l'adaptateur de prise (28) est enfiché dans le connecteur enfichable (10), une connexion électrique est établie entre le composant électronique (32) et l'électrovanne (2) via le raccord d'électrovanne (62).

2. Adaptateur de prise (28) selon la revendication 1, **caractérisé en ce que** le raccord d'électrovanne (62) présente une pièce enfichable (63) notamment mâle à enficher dans une contrepartie notamment femelle du raccord enfichable (10) de l'électrovanne (2), qui ne peut être insérée que dans une position de rotation, dans lequel une rainure de verrouillage (82) est réalisée notamment sur la pièce enfichable (63), notamment perpendiculairement à une direction d'enfichage, pour le verrouillage avec un nez de verrouillage complémentaire dans la contrepartie.

3. Adaptateur enfichable (28) selon la revendication 2, **caractérisé en ce qu'**au moins une ligne électrique (73) est renfermée dans et/ou sur la section enfichable (63) pour connecter électriquement le composant électronique (32) à l'électrovanne (2).

4. Adaptateur enfichable (28) selon une des revendications précédentes, **caractérisé en ce que** la chambre de réception (66) s'étend essentiellement dans un plan parallèle à une direction d'enfichage de l'adaptateur (28) et/ou le composant électronique (32) est renfermé et/ou fixé dans un plan parallèle à la direction d'insertion de l'adaptateur (28) et espacé de la pièce enfichable (63) dans la chambre de réception (66).

5. Adaptateur enfichable (28) selon une des revendications précédentes, **caractérisé en ce que** dans un fond de chambre de la chambre de réception (66) est disposée au moins une ouverture traversante (90) pour l'entrée de câble d'au moins une ligne électrique (73) et/ou d'au moins un conducteur de transmission de données (78, 80) .

6. Adaptateur enfichable (28) selon une des revendications précédentes, **caractérisé en ce qu'**une carte de circuit imprimé du composant électronique (32) présente des ouvertures traversantes (90), dans les lignes électriques (73) et/ou au moins un des conducteurs de transmission de données (78, 80) sont insérés, moyennant quoi la carte de circuit imprimé est maintenue dans la chambre de réception (66) de l'adaptateur (28).

7. Adaptateur enfichable (28) selon une des revendications 1 à 3, **caractérisé en ce que** le couvercle (68) présente au moins un dispositif de maintien (88) sur sa face tournée vers la chambre de réception (66), au moyen duquel le composant électronique (32) peut être fixé dans la chambre de réception (66).

8. Adaptateur enfichable (28) selon une des revendications précédentes, **caractérisé en ce que** l'adaptateur enfichable (28) présente pour connecter l'adaptateur enfichable (28) à un appareil de commande (20) de niveau supérieur via un système de bus série et/ou pour connecter l'adaptateur enfichable (28) à une batterie de voiture (22) du véhicule automobile présente un réceptacle de prise (54) adaptée à une prise de la ligne de communication du bus du système de bus et/ou une ligne électrique (73) connectée à la batterie de voiture (22), à laquelle la prise de la ligne de communication du bus et/ou la ligne électrique (73) est couplée ou peut être couplée électriquement et/ou mécaniquement.

9. Adaptateur de prise (28) selon la revendication 8, **caractérisé en ce que** dans le réceptacle de prise (54) au moins un conducteur de transmission de données (78, 80) est renfermé pour établir une interface de données entre l'unité de commande de niveau supérieur (20) et le composant électronique (32) ainsi qu'au moins une ligne électrique (73) pour produire une alimentation électrique entre une batterie de véhicule (22) du véhicule automobile et le composant électronique (32).

10. Adaptateur enfichable (28) selon une des revendications précédentes, **caractérisé en ce que** l'adaptateur enfichable (28) présente un boîtier (52), dans lequel le raccord d'électrovanne (62) et/ou la chambre de réception (66) et/ou le réceptacle de prise (54) sont formés d'un seul tenant avec le boîtier (52).

11. Adaptateur de prise (28) selon la revendication 10, **caractérisé en ce que** le boîtier (52) s'étend le long d'un axe principal (X) orientée dans la direction d'enfichage de l'adaptateur enfichable (28), dans lequel le raccord d'électrovanne (62) et le réceptacle de prise (54) sont disposés de manière à s'éloigner l'un de l'autre dans l'axe principal (X) aux extrémités opposées du boîtier (52).

12. Adaptateur enfichable (28) selon la revendication 11, **caractérisé en ce que** la chambre de réception (66) s'étend en forme de L à partir de l'axe principal (X) du boîtier (52) et s'étend au moins par sections parallèlement à la pièce enfichable (63).

13. Adaptateur de prise (28) selon une des revendications 10 à 12, **caractérisé en ce que** le boîtier (52) présente au moins un nez de verrouillage en contre-dépouille (56) sur une section de boîtier entourant le réceptacle de prise (54) pour verrouiller la prise de la ligne de communication du bus, dans lequel le nez de verrouillage (56) présente une pente de départ (58) qui s'élève dans la direction de l'insertion du connecteur et une plaque de verrouillage (60) disposée derrière la pente de départ (58) qui peut être saisie par l'arrière par un connecteur complémentaire de la prise.

14. Adaptateur de prise (28) selon la revendication 13, **caractérisé en ce que** le composant électronique (32) est configuré pour recevoir au moins un signal de bus provenant du dispositif de commande (20) via la ligne de communication par bus lorsque l'adaptateur de prise (28) est couplé au dispositif de commande (20) et pour convertir ce au moins un signal de bus en au moins un signal de commande électrique pour commander l'électrovanne (2), et pour transmettre le signal de commande électrique du composant électronique (32) à l'électrovanne (2).

15. Electrovanne (2), notamment déjà montée sur un véhicule automobile, qui présente un connecteur enfichable (10) pour recevoir un signal de commande électrique d'un dispositif de commande (20) du véhicule automobile pour faire fonctionner l'électrovanne (2), comprenant un adaptateur de prise (28) conçu selon les revendications 1 à 14.

16. Electrovanne (2) selon la revendication 15, **caractérisée en ce que** le connecteur enfichable (10) pour fournir une connexion par clip au raccord d'électrovanne (62) présente un nez de verrouillage conçu pour s'insérer dans la rainure de verrouillage (82) de la section enfichable (63).

17. Electrovanne (2) selon la revendication 15 ou 16, **caractérisée en ce que** l'électrovanne (2) comporte en outre un actionneur avec un actionneur à actionnement électromagnétique (6) et une bobine solénoïde (14), qui peut être commandée au moyen du signal de commande électrique.

18. Electrovanne (2) selon la revendication 17, **caractérisée en ce que** l'actionneur (6) de l'électrovanne (2) ferme l'électrovanne (2) dans sa position de départ et peut être ouverte grâce à l'électrovanne (2) étant activée au moyen d'un signal de commande électrique.

19. Agencement constitué d'un dispositif de commande (20) et d'une électrovanne (2), notamment déjà montée sur un véhicule automobile, dans lequel l'électrovanne (2) présente un connecteur enfichable (10) (12) pour recevoir un signal de commande électrique d'un dispositif de commande (20) du véhicule automobile pour faire fonctionner l'électrovanne (2), comprenant un adaptateur enfichable (28) conçu selon les revendications 1 à 14.

20. Circuit de refroidissement ou circuit de turbocompresseur pour véhicule automobile comportant un agencement selon la revendication 19.
